# EUROPÄISCHE PATENTSCHRIFT

(11) **EP 3 628 569 B1**
(45) Veröffentlichungstag und Bekanntmachung des Hinweises auf die Patenterteilung: **28.07.2021**
(21) Anmeldenummer: 18196890.0
(22) Anmeldetag: 26.09.2018
(51) Int. Cl.: B62D 7/15, G06Q 10/08, G05D 1/02, B66F 9/06, G06Q 10/06, G06Q 50/28, G06Q 10/04

(54) **VERFAHREN ZUM ANFAHREN EINES FAHRERLOSEN TRANSPORTFAHRZEUGES AUF EINER GENEIGTEN TRANSPORTFAHRBAHN**
METHOD FOR STARTING A DRIVERLESS TRANSPORT VEHICLE ON AN INCLINED TRANSPORT ROADWAY
PROCÉDÉ DE MISE EN MARCHE D'UN VÉHICULE DE TRANSPORT SANS CONDUCTEUR SUR UNE ROUTE DE TRANSPORT INCLINÉE

(43) Veröffentlichungstag der Anmeldung: 01.04.2020
(73) Patentinhaber: Siemens Aktiengesellschaft, 80333 München (DE)
(72) Erfinder: ASCHPURWIS, Carsten, 78464 Konstanz (DE)
(74) Vertreter: Siemens Patent Attorneys

(56) Entgegenhaltungen:
- CN-U- 207 046 296
- DAMION DUNLAP ET AL: "Motion planning for steep hill climbing", ROBOTICS AND AUTOMATION (ICRA), 2011 IEEE INTERNATIONAL CONFERENCE ON, IEEE, 9. Mai 2011 (2011-05-09), Seiten 707-714, XP032033583, DOI: 10.1109/ICRA.2011.5979709 ISBN: 978-1-61284-386-5

## Beschreibung

Die vorliegende Erfindung bezieht sich auf ein Verfahren zum Anfahren eines fahrerlosen Transportfahrzeugs auf einer geneigten Transportfahrbahn gemäss dem Patentanspruch 1, auf eine Verwendung des vorgenannten Verfahrens gemäss den Patentansprüchen 9 und 10 sowie auf ein fahrerloses Transportsystem gemäss dem Anspruch 11. Die Offenbarung DAMION DUNLAP ET AL: "Motion planning for steep hill climbing",ROBOTICS AND AUTOMATION (ICRA), 2011 IEEE INTERNATIONAL CONFERENCE ON, IEEE, 9. Mai 2011 (2011-05-09), Seiten 707-714, DOI: 10.1109/ICRA.2011.5979709ISBN: 978-1-61284-386-5 wird als nächstliegender Stand der Technik des Anspruchs 1 zu sehen.

Der Erfindung liegt das Gebiet Sortiersysteme zugrunde. Sortiersysteme identifizieren in ungeordneter Reihenfolge ankommendes, heterogen geformtes und vereinzeltes Stückgut, beispielsweise Pakete (in Postämtern), Gepäckstücke (in Flughafenterminals) oder Kommissionsware (in Versandhäusern), aufgrund vorgegebener Unterscheidungskriterien und verteilen sie auf festgelegte Ziele. Solche Sortiersysteme bestehen aus Sortieranlagen, die mit entsprechenden organisatorischen Abläufen und angepassten Betriebsstrategien, welche in zugehörigen Steuerungen bei den Sortieranlagen bzw. Sortiersystemen implementiert sind, die Systemfunktionalität der Sortiersysteme gewährleisten.

Die Sortieranlage stellt dabei den technischen Teil des Sortiersystems dar und besteht aus einem oder mehreren Sortern, welcher bzw. welche die Verteilung des Stückgutes auf die Ziele realisiert bzw. realisieren, sowie vor- und nachgeschalteten Funktionsbereichen, wie Zu- und Abförderungen des Stückgutes.

Ein solcher Sorter selbst besteht aus einer Einschleusung, einem Verteilförderer und End-/Zielstellen für das zu verteilende Stückgut. Sorter erreichen je nach Stückgutgewicht Sortierleistungen von Stückgut bis über 15.000 Stück/h. Übliche Maximalgewichte von Stückgut liegen bei ca. 20kg bis 60kg, bei einzelnen Sortiersystemen auch bis zu 150kg.

Bei technikorientierter Klassifizierung von Verteilförderern nach den Kriterien Belegungsart, Wirkprinzip einer Ausschleusung des Stückgutes und fördertechnisches Prinzip können insbesondere Verteilförderer mit einer Quergurt- bzw. Querbandtechnologie und einer Kippschalentechnologie, kurz Quergurtförderer bzw. Querbandsorter und Kippschalenförderer, unterschieden werden.

Ein Quergurtförderer bzw. Querbandsorter ist aus der Quelle [4] bekannt.

Anstelle von in einer geschlossenen Kette verbundenen Transportelementen werden zunehmend fahrerlose autonome Transportfahrzeuge eingesetzt wie sie als FTF, AGV oder als «mobile robots» bekannt sind:
FTF
   Fahrerlose Transportfahrzeuge, → Quelle [2];
AGV
   Automated_guided_vehicle, → Quelle [1];
mobile robots
   → Quelle [3].

Die vorgenannten Vehikel werden im Folgenden summarisch mit dem Begriff «fahrerloses Transportfahrzeuge FTF» oder kurz mit «FTF» bezeichnet.
Diese fahrerlosen Transportfahrzeuge erreichen im vorgenannten Einsatzgebiet Geschwindigkeiten bis etwa 3m/s. Unter besonderen Bedingungen sind für diese FTF auch höhere Geschwindigkeiten vorgesehen. Die Streckenführung erfolgt raumgängig, zumeist horizontal. Anstelle von Kreuzungen werden sogenannte Überwerfungen angelegt, um einen möglichst kollisions- und staufreien Betrieb zu ermöglichen. In größeren Flughafen-Terminals sind für die fahrerlosen Transportfahrzeuge mehrere Ebenen vorgesehen. Die vorgenannten Überwerfungen bzw. eine Fahrt von einer Ebene zu einer anderen Ebene bedingen, dass eine Höhendifferenz von bis zu 5m überwunden werden muss und zwar aufwärts wie abwärts.

Auch bei einer ausgeklügelten Regelung einer Vielzahl von solchen FTF kann ein Stillstand betrieblich nicht ausgeschlossen werden. Ist nun ein solches FTF auf einem geneigten Fahrbahnabschnitt, stellt dies beträchtliche Anforderungen an die Leistung des Antriebs. Aus Kapazitätsgründen der auf dem Fahrzeug befindlichen Batterie sowie auch aus wirtschaftlichen Gründen, kann die Leistung des Antriebs nicht einfach so erhöht werden, damit das Anfahren auf der geneigten Fahrbahn sichergestellt ist. Dabei ist ein synchrones Wiederanfahren einer Vielzahl von solchen FTF von besonderer Bedeutung.

Die Dimensionierung des Antriebs eines fahrerlosen Fahrzeugen FTF erfordert eine komplexe Analyse. Bei der Auslegung eines Fahrzeugs, das auch Steigungen (=geneigte Fahrbahnabschnitte) in beiden Richtungen bewältigen soll, müssen verschiedene Last-Zustände berücksichtigt werden. Dabei gibt es Situationen, die zwingend beherrscht werden müssen:
Der überwachte Sicherheitsbereich muss gleich dem maximal erlaubtem Bremsweg mit Beladung entsprechen und zwar auch abwärts.
- Kinematische Anforderungen, die mit dem gewählten Antrieb beherrscht werden müssen wie zB eine Mindest-Steigung bei nominaler Geschwindigkeit eine Mindest-Beschleunigung.

Aus diesen Eckdaten wird sich ggf ein Antrieb ergeben, der die Bedingung erfüllt, aber in einzelnen Situationen an seine Grenzen stoßen würde wie zB Anhalten auf einem geneigten Fahrbahnabschnitt (Anhalten in einer Steigung) und Wiederanfahren in im vorgenannten Fahrbahnabschnitt.

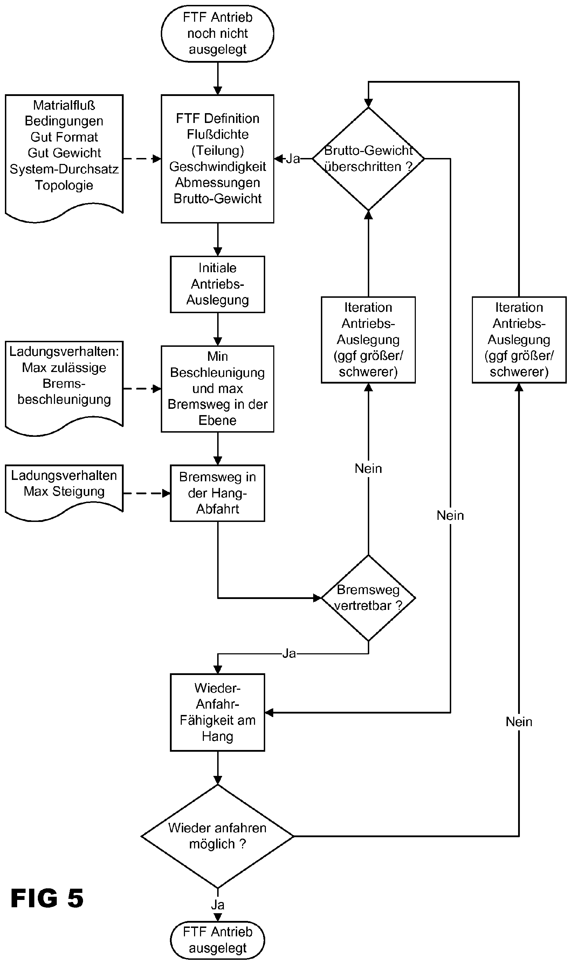

In FIG 5 ist ein Ablaufdiagramm zur Dimensionierung eines Antriebs für ein FTF zum Anfahren in einer Steigung dargestellt.

Die üblichen Maßnahmen wie Reduzierung der Steigung, Erhöhung der Leistungsreserve im Antrieb, Reduzierung der Zuladung sind entweder unpraktikabel oder mit einem erheblichen Mehraufwand verbunden, der wirtschaftlich nicht tragbar ist.

Der vorliegenden Erfindung liegt daher die Aufgabe zugrunde ein Verfahren für das Anfahren eines fahrerlosen Transportfahrzeuges auf einer geneigten Transportfahrbahn anzugeben, ohne dass der Antrieb überdimensioniert werden muss und ohne dass massive Einschränkung für das Layout der Fahrbahnen hingenommen werden müssen.

Diese Aufgabe wird durch die in den unabhängigen Patentansprüchen angegebenen Maßnahmen gelöst. Vorteilhafte Ausgestaltungen der Erfindung sind in weiteren Ansprüchen angegeben.

Das erfindungsgemäße Verfahren zum Anfahren eines fahrerlosen Transportfahrzeugs FTF auf einer geneigten Transportfahrbahn beruht auf einem FTF, das
- Mittel aufweist, um die Neigungsrichtung der Transportfahrbahn relativ zum Transportfahrzeug zu detektieren und das
- steuerbare Lenkantriebe aufweist. Das erfindungsgemäße Verfahren zeichnet sich aus durch die Verfahrensschritte:
   i) zum Anfahren werden die Lenkantriebe aufgrund der detektierten Neigungsrichtung so angesteuert, dass das Transportfahrzeug in einer zur Neigungsrichtung verschiedenen Richtung anfährt;
   ii) nach Erreichen einer vorgegebenen Minimalgeschwindigkeit des fahrerloses Transportfahrzeuges werden die Lenkantriebe so gestellt, dass das Transportfahrzeug in der Neigungsrichtung weiterfährt.

Aus diesem erfindungsgemäßen Verfahren können sich die folgend aufgeführten Vorteile zusätzlich ergeben.

Das Anfahren in einer Anfahrrichtung mit einem Anfahrrichtungswinkel relativ zur Neigungsrichtung kann auf zwei verschiedene Arten erfolgen, die entsprechend dem Einsatzgebiet frei gewählt werden können:
i) Ein FTF braucht seine Ausrichtung relativ zur Neigungsrichtung beim Wiederanfahren nicht zu ändern, da die Lenkantriebe eines FTF sich von einer Grundposition um mindestens ±90° drehen lassen. Ein größerer Drehbereich ist nicht erforderlich, da dies mit einer Richtungsänderung der Antriebsräder der Lenkantriebe erreicht werden kann. Somit kann das FTF nach Drehen der Lenkantriebe um den vorgesehenen Anfahrrichtungswinkel relativ zur Neigungsrichtung und entsprechender Beaufschlagung der Antriebsräder mit einem Drehmoment Anfahren ohne die Ausrichtung des FTF zu ändern, das gilt dann auch später beim Übergang des Fahrens zur Neigungsrichtung.
ii) Aufgrund der freien Einstellbarkeit der Lenkantriebe ist es jedoch auch möglich, dass das FTF vor dem Anfahren sich um einen vorgegebenen Anfahrrichtungswinkel relativ zur Neigungsrichtung dreht. Diese Drehung kann erreicht werden durch eine Betätigung der Lenkantriebe und ihrer zugehörigen Räder als ein virtuelles Differentialgetriebe. Diese Drehung kann man sich auch vorstellen mit einem Raupenfahrzeug, dessen Raupen in entgegengesetzter Richtung betätigt werden. Für diesen Fall weist das Fahrerlose Transportfahrzeuge vorzugsweise 4 Stützrollen an den Ecken (unter Annahme eines rechteckförmigen Grundrisses) auf und zwei parallel angeordnete Lenkantriebe in der Mitte. Durch gegenläufige Beaufschlagung der Antriebsräder mit einem Drehmoment ergibt sich ein entsprechender Anfahrrichtungswinkel bzw diese gegenläufige Beaufschlagung entspricht dem vorstehend erwähnten virtuellen Differentialgetriebe.

Mit dem Erreichen einer Minimalgeschwindigkeit erreicht das FTF eine entsprechende kinetische Energie, so dass ein Richtungswechsel zur Neigungsrichtung eingeleitet werden kann. Dadurch braucht die Antriebsleistung für das Anfahren in einer Steigung nicht erhöht zu werden. Jedes Anfahren beinhaltet sogenannte Losbrechmomente wie zB Walkarbeit, temporäre Abplattung der Standfläche. Sobald diese Losbrechmomente überwunden sind und eine vorgegebene Minimalgeschwindigkeit in einem Anfahrrichtungswinkel relativ zur Neigungsrichtung erreicht wird, werden die Antriebselemente so gestellt, dass das FTF in Neigungsrichtung weiterfährt. Dieser Richtungswechsel quer zu Neigungsrichtung erfolgt vorzugsweise kontinuierlich. Die vorgegebene Minimalgeschwindigkeit liegt vorzugsweise im optimalen Drehzahlbereich der Motoren.

Der vorgenannte Anfahrrichtungswinkel relativ zur Neigungsrichtung liegt bevorzugt in einem Bereich von 90° bis etwa 45°. Ein Anfahrwinkel im Bereich 90° bis etwa 110° macht durchaus Sinn. Das Anfahren wird dadurch erleichtert, als in dieser Richtung die Gravitation zusätzlich als Beschleunigungskomponente wird. Die vorgenannten 90° bis etwa 110° sind äquivalent zu einer Drehung um -90° bis etwa -70° verbunden mit einer Richtungsänderung der Antriebsräder.

Die Erfindung wird nachfolgend anhand der Zeichnung beispielsweise näher erläutert. Dabei zeigen:
Figur 1 Darstellung mehrerer fahrerloser Fahrzeuge längs einer geneigten Transportfahrbahn;
Figur 2 Beispiel zur Disposition von Antriebselementen und Stützrollen eines FTF für die Durchführung des Verfahrens auf einer geneigten Transportfahrbahn;
Figur 3 Bewegungsablauf zum Anfahren auf einer geneigten Transportfahrbahn ohne Änderung der Ausrichtung der fahrerlosen Fahrzeuge;
Figur 4 Bewegungsablauf zum Anfahren auf einer geneigten Transportfahrbahn mit einer Änderung der Ausrichtung der fahrerlosen Fahrzeuge;
Figur 5 Ablaufdiagramm zur Dimensionierung eines Antriebs für ein FTF zum Anfahren auf einer geneigten Transportfahrbahn.

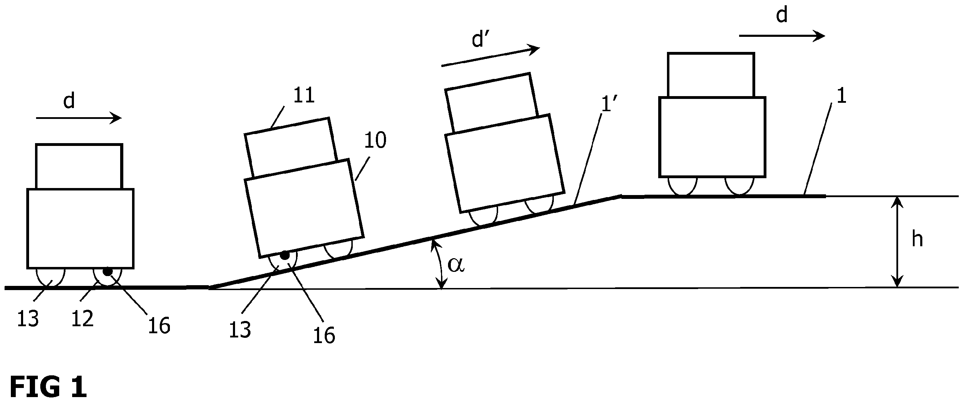

FIG 1 zeigt eine Darstellung mehrerer fahrerloser Fahrzeuge längs einer Transportstrecke mit einem geneigten Transportfahrbahnabschnitt. Die Steigung des geneigten Transportfahrbahnabschnittes ist definiert durch den Neigungswinkel bzw. Steigungswinkel α und die zu überwindende Höhe h für eine Überwerfung anstelle einer Kreuzung oder für die Fahrt auf eine andere Transportebene. Ein typischer Wert für die Höhe h liegt bei etwa 5m und für den Neigungswinkel α in einem Bereich von etwa 8° bis 20°. Die dargestellte Mehrzahl der FTF soll auch zeigen, dass bei einem betrieblich bedingten Halt, nicht nur mehrere einzelne Fahrzeuge in einer Steigung wieder anfahren müssen, sondern dass eine Mehrzahl von FTF über einen grösseren Transportfahrbahnabschnitt 1, 1' synchron anfahren muss. Ohne synchrones Anfahren ergibt sich eine ganz erhebliche Reduktion des Durchsatzes von zu transportierenden Stückgütern. Dieses Phänomen ist im Strassenverkehr hinlänglich bekannt bei einer sogenannten Stauauflösung. In FIG 1 ist die horizontale Transportrichtung d und die geneigte Transportrichtung d' je hervorgehoben. Die fahrerlosen Transportfahrzeuge 10 tragen je ein Stückgut 11. Diese Stückgüter sind in aller Regel verschieden schwer und verschieden gross und somit nicht von gleicher Dimension, wie dies der FIG 1 entnommen werden könnte. Jedes Transportfahrzeug 10 weist Lenkantriebe 12 bzw. Antriebsräder 12 und Stützrollen 13 mit je einer Drehachse 16 auf. Lenkantriebe 12 bzw. Antriebsräder 12 und Stützrollen 13 sind bezüglich des Transportfahrzeuges 10 für die Transportrichtungsvorgabe drehbar. Mit 1 bzw. 1' ist eine horizontale bzw. geneigte Transportfahrbahn bezeichnet.

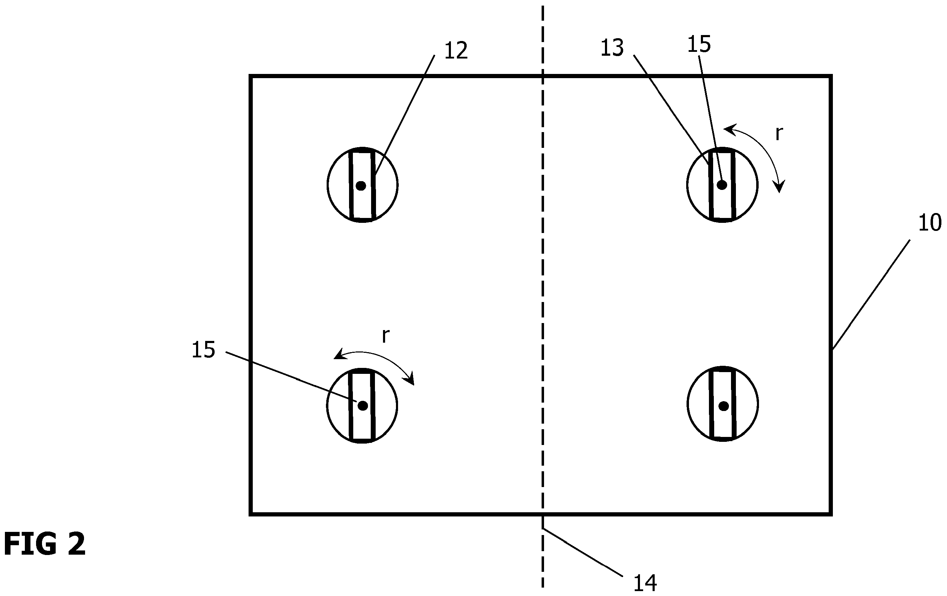

FIG 2 zeigt den Grundriss eines fahrerlosen Transportfahrzeuges 10 mit Lenkantrieben 12 und Stützrollen 13. Diese Anordnung ist rein beispielhaft, in der Quelle [2] sind weitere Anordnungen gezeigt, beispielsweise vier Stützrollen 13 an den Ecken des FTF und zwei gegenüberliegend angeordnete Antriebsrollen 12 im Innern des rechteckigen Grundrisses eines FTF.

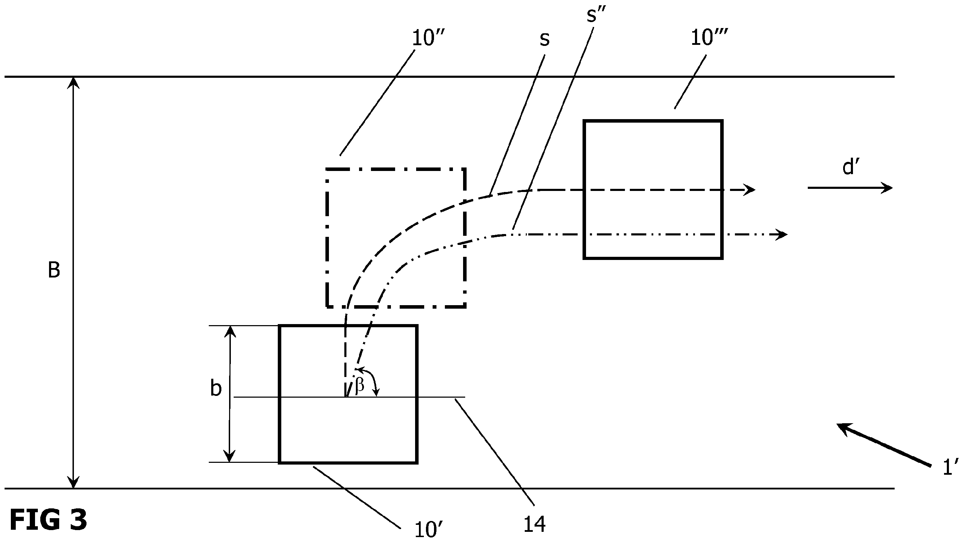

In FIG 3 ist der Bewegungsablauf für das Anfahren in auf einer geneigten Transportfahrbahnstrecke 1' ohne wesentliche Änderung der Ausrichtung des FTF längs einer Bewegungsspur s gezeigt. Der Anfahrrichtungswinkel β (für die Bewegungsspur s in FIG 3 nicht dargestellt) beträgt 90° entsprechend Anfahren quer zur Neigungsrichtung. Die Richtungsachse 14 des FTF verbleibt im Wesentlichen parallel zur Neigungsrichtung d'. Wesentlich bedeutet hier, dass diese Parallelität bis auf dynamische Effekte stets erhalten bleibt. Die Fahrbahnbreite wird mit der Grösse B angegeben und die Fahrzeugbreite mit der Grösse b.
Es wird angenommen, dass ein FTF in der Position 10' anhalten musste. Für das Anfahren werden die Lenkantriebe 12 um 90° gedreht und anschliessend das Antriebsrad durch eine Steuerung von einem Motor angetrieben, so dass sich das FTF zunächst quer zur Neigungsrichtung d' bewegt. Nach Erreichen einer vorgegebenen Minimalgeschwindigkeit werden mindestens die Antriebselemente 12 etwas gedreht, so dass die weitere Bewegung des TFT in eine Position 10" erfolgt - das FTF befährt einen Bogen s und beim Erreichen der Richtung d' werden die Antriebselemente so gestellt, dass das FTF geradeaus in Richtung d' weiterfährt, vgl Position 10"'.
In der FIG 3 ist rein beispielhaft zusätzlich eine Bewegungsspur s" gezeigt, bei der der Anfahrrichtungswinkel β etwa 60° beträgt.

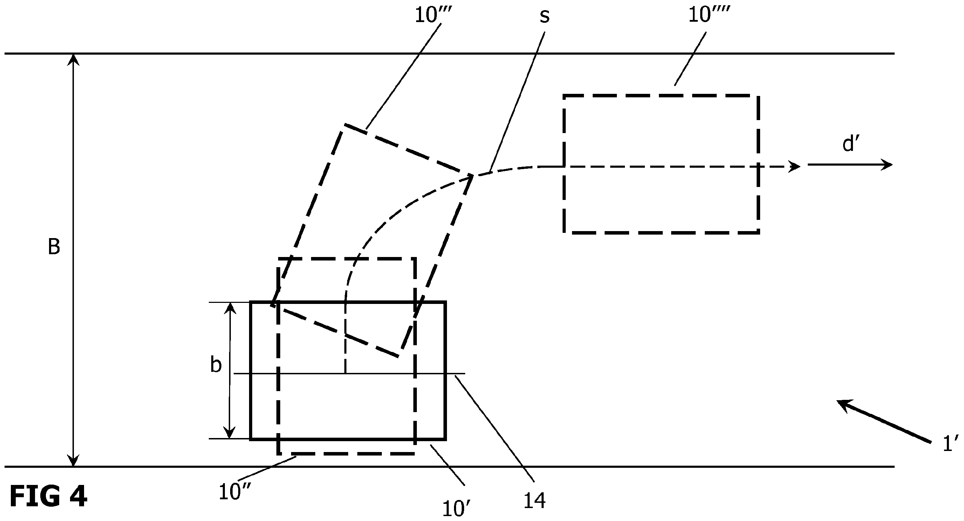

In FIG 4 ist der Bewegungsablauf für das Anfahren auf einer geneigten Transportfahrbahn 1' mit einer Änderung der Ausrichtung des FTF gezeigt, die Ausrichtung des FTF ist mit der Richtungsachse 14 angegeben. Die Fahrbahnbreite wird wiederum mit der Grösse B angegeben und die Fahrzeugbreite mit der Grösse b. Der Rand der Fahrbahn soll nicht so verstanden werden, dass hier eine Wand vorhanden ist, analog der Situation bei Überlandstrassen, wo am Strassenrand keine Leitplanken oder Mauern vorgesehen sind. Dieses Fehlen von Leitplanken oder Wänden ist bei dieser Ausführungsform der Erfindung wichtig beim Drehen des fahrerlosen Fahrzeugs: Beim Drehen können die Ecken des Fahrzeugs 10 sich auch ausserhalb der Fahrbahnstreifen der Fahrbahnbreite B befinden. Auch bei einem Bewegungsablauf mit Änderung der Ausrichtung eines FTF ist ein Anfahren mit einem Anfahrrichtungswinkel β ungleich 90° möglich (nicht in FIG 4 dargestellt).

Fahrerlose Transportsysteme FTS sind innerbetriebliche, flurgebundene Fördersysteme mit automatisch gesteuerten Fahrzeugen, deren primäre Aufgabe der Materialtransport, nicht aber der Personentransport ist. FTS bestehen im Wesentlichen aus folgenden Komponenten (so zitiert aus [2]):
- einem oder mehreren fahrerlosen Transportfahrzeugen einer Leitsteuerung;
- Einrichtungen zur Standortbestimmung und Lageerfassung;
- Einrichtungen zur Datenübertragung.
Die FTF werden von einer zentralen Steuerung geführt und für die Navigation stehen zentrale wie auch Fahrzeug-residente Mittel zur Verfügung. Zwar ist die Topologie einer Transportfahrbahn 1, 1' in der Leitsteuerung speicherbar, zweckmässigerweise ist jedoch vorgesehen, dass ein jedes FTF das mit dem vorstehend beschriebenen Verfahren quer zur Steigungsrichtung anfährt, Mittel aufweist, um die Neigungsrichtung d' zu detektieren. In der FIG 1 ist eine homogene Neigung mit dem konstanten Neigungswinkel α gezeigt. In der Realität können verschiedene Neigungswinkel α', α", ... auftreten. Für die sogenannte Grunddimensionierung der Antriebe eines FTF wird ein maximal zulässiger Neigungswinkel αₘₐₓ festgelegt, der bei der Disposition einer Sorter- bzw. Transportanlage strikt einzuhalten ist. Die vorgenannten verschiedenen Neigungswinkel α', α" müssen dabei den Bedingungen
α' < αₘₐₓ und α" < αₘₐₓ
genügen.
Zusätzlich können diese fahrzeugresidenten Mittel, also Lagesensoren, auch noch den Neigungswinkel α detektieren. Die Detektion der Neigungsrichtung d' ist wichtig, damit die Lenkantriebe 12 vor oder beim Anfahren in jene Position gebracht werden, damit das FTF in einem Anfahrrichtungswinkel β zur Neigungsrichtung d' anfahren kann. Die erforderliche Genauigkeit der Detektion der Neigungsrichtung d' ist bei der Leitsteuerung nicht in jedem Fall sichergestellt, da jene Daten als Anlagedaten gespeichert sind und keine Echtzeitdaten beinhalten.

Die vorliegende Erfindung kann auch für folgenden Ausnahmefall verwendet werden:
Es kann nicht verhindert werden, dass auch relativ kleine Hindernisse von einigen wenigen Zentimetern auf einer Transportfahrbahn 1 spontan auftreten. Wird nun ein FTF von einem solchen kleinen Hindernis blockiert und wird das normale Anfahren in Transportrichtung d dadurch verhindert,
kann die lokale Steuerung eines FTF das Anfahren in einem vorgegebenen Anfahrrichtungswinkel β zur Transportrichtung d initiieren. Durch das Drehen der Antriebselemente 12 um den Anfahrrichtungswinkel β relativ zur Transportrichtung d kann dadurch das betreffende Hindernis umfahren werden.

Ein Anfahrrichtungswinkel β im Bereich von 90° bis etwa 110° ist deshalb besonders vorteilhaft, weil die Gravitation das Anfahren unterstützt. Anstelle eines Anfahrrichtungswinkel β von 90° bis etwa 110° kann auch ein Anfahrrichtungswinkel β im Bereich von etwa -70° bis -90° vorgesehen werden unter gleichzeitiger Einstellung einer Umkehr der Antriebsräder 12.

Das synchrone Anfahren einer Mehrzahl von FTF kann wie folgt ausgestaltet sein:
Da jedes FTF Mittel aufweist, um um die Neigungsrichtung d' der Transportfahrbahn 1' relativ zum Transportfahrzeug 10 zu detektieren und somit auch Mittel aufweist um den Neigungswinkel α der Transportbahn 1' zu detektieren, kann vorgesehen werden, dass jene FTF, die sich auf einer horizontalen Transportfahrbahn befinden, normal anfahren, also mit einem Anfahrtsrichtungswinkel β = 0.

Bedingt durch temporäre Umbauten in einem Fahrerlosen Transportsystem kann der Fall auftreten, der detektierte Neigungswinkel α grösser ist als der aufgrund der Dimensionierung der Leistung für die Lenkantriebe maximal zulässige Neigungswinkel ist. Dazu wird der detektierte Neigungswinkel α mit dem für den Antrieb der Lenkantriebe maximal zulässigen Neigungswinkel verglichen. Falls der detektierte Neigungswinkel α oberhalb des maximal zulässigen Neigungswinkel liegt, werden nach dem Anfahren die Lenkantriebe 12 so angesteuert, dass das fahrerlose Fahrzeug mäanderförmig solange weiterfährt, bis der detektierte Neigungswinkel α unterhalb des maximal zulässigen Neigungswinkels liegt.

### Liste der Bezugszeichen, Glossar

- 1: Transportstrecke, Transportfahrbahn
- 1': geneigte Transportstrecke, geneigte Transportfahrbahn
- 10: Fahrerloses Transportfahrzeug FTF
- 10', 10", 10"', 10"": sukzessive Positionen eines FTF beim Anfahren in einer Steigung
- 11: Stückgut
- 12: Lenkantrieb, angetriebenes Rad, Antriebselement
- 13: Stützrolle, drehbare Stützrolle
- 14: Richtungsachse des Transportfahrzeugs
- 15: Drehachse eines Lenkantriebs oder einer Stützrolle
- 16: Radachse eines angetriebenen Rades 12 oder eines Rades 13
- α: Steigungswinkel; Neigungswinkel
- β: Anfahrrichtungswinkel relativ zur Neigungsrichtung
- B: Fahrbahnbreite
- b: FTF-Breite
- d: Transportrichtung
- d': Transportrichtung in einer Steigung, Neigungsrichtung
- h: Höhe
- s: Bewegungsspur beim Anfahren in einer Steigung
- s": Bewegungsspur beim Anfahren in einer Steigung mit einem Anfahrrichtungswinkel β < 90°
- FTF: Fahrerloses Transportfahrzeug
- FTS: Fahrerloses Transportsystem

### Liste der zitierten Dokumente und Referenzen

[1] AGV https://en.wikipedia.org/wiki/Automated guided vehicle
[2] FTF https://de.wikipedia.org/wiki/Fahrerloses Transportfahrzeug
[3] mobile robots https://en.wikipedia.org/wiki/Mobile robot
[4] Quergurtsorter https://de.wikipedia.org/wiki/Quergurtsorter

## Patentansprüche

1. Verfahren zum Anfahren eines fahrerlosen Transportfahrzeugs (10) auf einer geneigten Transportfahrbahn (1'), wobei
- das Transportfahrzeug (10) Mittel aufweist, um die Neigungsrichtung (d') der Transportfahrbahn (1') relativ zum Transportfahrzeug (10) zu detektieren und wobei
- das Transportfahrzeug (10) steuerbare Lenkantriebe (12) aufweist,
**gekennzeichnet durch** die Verfahrensschritte:
i) zum Anfahren werden die Lenkantriebe (12) aufgrund der detektierten Neigungsrichtung (d') so angesteuert, dass das Transportfahrzeug (10) in einer zur Neigungsrichtung (d') verschiedenen Richtung (d', β) anfährt;
ii) nach Erreichen einer vorgegebenen Minimalgeschwindigkeit des Transportfahrzeuges (10) werden die Lenkantriebe (12) so gestellt, dass das Transportfahrzeug (10) in der Neigungsrichtung (d') weiterfährt (10', 10", 10''').

2. Verfahren nach Anspruch 1,
**dadurch gekennzeichnet, dass**
dem Transportfahrzeug (10) eine Richtungsachse (14) zugewiesen ist und in den Verfahrensschritten i) und ii) die Richtungsachse (14) parallel zur Neigungsrichtung (d') verbleibt.

3. Verfahren nach Anspruch 1,
**dadurch gekennzeichnet, dass**
dem Transportfahrzeug (10) eine Richtungsachse (14) zugewiesen ist und dass vor Ausführung des Verfahrensschrittes i) das Transportfahrzeug (10) mittels der steuerbaren Lenkantriebe (12) um einen Anfahrrichtungswinkel (β) gedreht wird und im Verfahrensschritt ii) das Transportfahrzeug (10) sich in der Richtungsachse (14) weiterbewegt.

4. Verfahren nach Anspruch 3,
**dadurch gekennzeichnet, dass**
für die Ausführung des Verfahrensschrittes i) die Lenkantriebe (12) als virtuelles Differentialgetriebe betätigt werden.

5. Verfahren nach einem der Ansprüche 1 bis 4,
**dadurch gekennzeichnet, dass**
für die Ausführung des Verfahrensschrittes ii) die Lenkantriebe (12) in kontinuierlicher Weise umgestellt werden.

6. Verfahren nach einem der Ansprüche 1 bis 5,
**dadurch gekennzeichnet, dass**
jedes Transportfahrzeug (10) Mittel aufweist, um einen Neigungswinkel (α) zusätzlich zur Neigungsrichtung (d') der Transportfahrbahn (1') zu detektieren, um die Lenkantriebe (12) entsprechend anzusteuern.

7. Verfahren nach einem der Ansprüche 1 bis 6,
**dadurch gekennzeichnet, dass**
im Verfahrensschritt i) ein Anfahrrichtungswinkel (β) relativ zur Neigungsrichtung definiert ist, wobei der Anfahrrichtungswinkel in einem Bereich von 45° bis 110° liegt.

8. Verfahren nach Anspruch 6 oder Anspruch 7 mit Rückbezug auf Anspruch 6,
**dadurch gekennzeichnet, dass**
der detektierte Neigungswinkel (α) mit einem für den Antrieb der Lenkantriebe maximal zulässigen Neigungswinkel verglichen wird und falls der detektierte Neigungswinkel (α) oberhalb des maximal zulässigen Neigungswinkel liegt im Verfahrensschritt i) nach dem Anfahren die Lenkantriebe (12) so angesteuert werden, dass das fahrerlose Fahrzeug solange mäanderförmig weiterfährt, bis der detektierte Neigungswinkel (α) unterhalb des maximal zulässigen Neigungswinkels liegt.

9. Verwendung des Verfahrens nach einem der Ansprüche 1 bis 8 zum synchronen Anfahren einer Mehrzahl von Fahrerlosen Transportfahrzeugen (10) längs einer Transportfahrbahn (1, 1').

10. Verwendung des Verfahrens nach einem der Ansprüche 1 bis 8 zum Umfahren eines auf einer Transportfahrbahn (1, 1') befindlichen Hindernisses.

11. Fahrerlose Transportsystem umfassend eine Mehrzahl von fahrerlosen Transportfahrzeugen auf Transportstrecken (1, 1') zur Durchführung des Verfahrens gemäss einem der Patentansprüche 1 bis 8.

## Claims

1. Method for moving a driverless transport vehicle (10) on an inclined transport roadway (1'), wherein
- the transport vehicle (10) has means of detecting the direction of inclination (d') of the transport roadway (1') relative to the transport vehicle (10) and wherein
- the transport vehicle (10) has controllable steering drives (12),
**characterised by** the method steps:
i) for movement the steering drives (12) are activated on account of the detected direction of inclination (d') so that the transport vehicle (10) moves in a direction (d',β) which differs from the direction of inclination (d');
ii) after reaching a predetermined minimum speed of the transport vehicle (10), the steering drives (12) are set so that the transport vehicle (10) continues to move (10', 10", 10"') in the direction of inclination (d').

2. Method according to claim 1,
**characterised in that**
an axis of direction (14) is assigned to the transport vehicle (10) and in the method steps i) and ii) the axis of direction (14) remains parallel to the direction of inclination (d').

3. Method according to claim 1,
**characterised in that**
an axis of direction (14) is assigned to the transport vehicle (10) and that before executing the method step (i), the transport vehicle (10) is rotated about a direction of motion angle (β) by means of the controllable steering drives (12) and in the method step ii), the transport vehicle (10) continues to move in the axis of direction (14).

4. Method according to claim 3,
**characterised in that**
for the execution of the method step i), the steering drives (12) are actuated as virtual differential gears.

5. Method according to one of claims 1 to 4,
**characterised in that**
for the execution of the method step ii), the steering drives (12) are repositioned continuously.

6. Method according to one of claims 1 to 5,
**characterised in that**
each transport vehicle (10) has means of detecting an angle of inclination (α) in addition to the direction of inclination (d') of the transport roadway (1'), in order to actuate the steering drives (12) accordingly.

7. Method according to one of claims 1 to 6,
**characterised in that**
in method step i), a direction of motion angle (β) relative to the direction of inclination is defined, wherein the direction of motion angle lies in a region of 45° to 110°.

8. Method according to claim 6 or claim 7 with reference to claim 6,
**characterised in that**
the detected angle of inclination (α) is compared with a maximum permissible angle of inclination for the drive of the steering drives and if the detected angle of inclination (α) lies above the maximum permissible angle of inclination in method step i), after movement the steering drives (12) are activated so that the driverless vehicle continues to move in a meander type manner until the detected angle of inclination (α) lies below the maximum permissible angle of inclination.

9. Use of the method according to one of claims 1 to 8 for synchronously moving a plurality of driverless transport vehicles (10) along a transport roadway (1, 1').

10. Use of the method according to one of claims 1 to 8 for moving around an obstacle located on a transport roadway (1, 1').

11. Driverless transport system comprising a plurality of driverless transport vehicles on transport paths (1, 1') for carrying out the method according to one of claims 1 to 8.

## Revendications

1. Procédé de mise en marche d'un véhicule de transport sans conducteur (10) sur une route de transport inclinée (1'), dans lequel
- le véhicule de transport (10) présente des moyens pour détecter le sens d'inclinaison (d') de la route de transport (1') par rapport au véhicule de transport (10) et dans lequel
- le véhicule de transport (10) présente des entraînements de direction (12),
**caractérisé par** les étapes de procédé :
i) pour la mise en marche, les entraînements de direction (12) sur la base du sens d'inclinaison détecté (d') sont commandés de manière telle que le véhicule de transport (10) se met en marche dans un sens (d', β) différent du sens d'inclinaison (d') ;
ii) après atteinte d'une vitesse minimale prédéfinie du véhicule de transport (10), les entraînements de direction (12) sont réglés de manière telle que le véhicule de transport (10) poursuit sa progression (10', 10", 10"') dans le sens d'inclinaison (d').

2. Procédé selon la revendication 1, **caractérisé en ce qu'**un axe directionnel (14) est attribué au véhicule de transport (10) et, lors des étapes de procédé i) et ii), l'axe directionnel (14) reste parallèle au sens d'inclinaison (d').

3. Procédé selon la revendication 1, **caractérisé en ce qu'**un axe directionnel (14) est attribué au véhicule de transport (10) et **en ce qu'**avant l'exécution de l'étape de procédé i), le véhicule de transport (10) est tourné d'un angle de sens de mise en marche (β) au moyen des entraînements de direction manœuvrables (12) et, à l'étape de procédé ii), le véhicule de transport (10) poursuit sa progression dans l'axe directionnel (14).

4. Procédé selon la revendication 3, **caractérisé en ce que** pour l'exécution de l'étape de procédé i), les entraînements de direction (12) sont actionnés comme engrenage différentiel virtuel.

5. Procédé selon l'une des revendications 1 à 4, **caractérisé en ce que** pour l'exécution de l'étape de procédé ii), les entraînements de direction (12) sont manœuvrés d'une manière continue.

6. Procédé selon l'une des revendications 1 à 5, **caractérisé en ce que** chaque véhicule de transport (10) présente des moyens destinés à détecter un angle d'inclinaison (α) en plus du sens d'inclinaison (d') de la route de transport (1'), pour commander en conséquence les entraînements de direction (12).

7. Procédé selon l'une des revendications 1 à 6, **caractérisé en ce qu'**à l'étape de procédé i) est défini un angle de sens de mise en marche (β) par rapport au sens d'inclinaison, dans lequel l'angle de sens de mise en marche est de l'ordre de 45° à 110°.

8. Procédé selon la revendication 6 ou la revendication 7 en référence à la revendication 6, **caractérisé en ce que** l'angle d'inclinaison détecté (α) est comparé à un angle d'inclinaison maximal admissible pour l'entraînement des entraînements de direction et si l'angle d'inclinaison détecté (α) se situe au-dessus de l'angle d'inclinaison maximal admissible à l'étape de procédé i) après la mise en marche les entraînements de direction (12) sont commandés de manière telle que le véhicule sans conducteur poursuit sa progression en méandres jusqu'à ce que l'angle d'inclinaison détecté (α) se situe au-dessous de l'angle d'inclinaison maximal admissible.

9. Utilisation du procédé selon l'une des revendications 1 à 8 pour la mise en marche synchrone d'une pluralité de véhicules de transport (10) sans conducteur le long d'une route de transport (1, 1').

10. Utilisation du procédé selon l'une des revendications 1 à 8 afin de contourner un obstacle se trouvant sur une route de transport (1, 1').

11. Système de transport sans conducteur comprenant une pluralité de véhicules de transport sans conducteur sur des voies de transport (1, 1') pour exécuter le procédé selon l'une des revendications de brevet 1 à 8.
